# EUROPEAN PATENT SPECIFICATION

(11) **EP 2 213 369 B1**
(45) Date of publication and mention of the grant of the patent: **01.07.2015**
(21) Application number: 09425007.3
(22) Date of filing: 15.01.2009
(51) Int. Cl.: B01J 21/18, B01J 23/745, B01J 35/00, B01J 37/02, B01J 37/12, B01J 37/16, C01B 31/02, H01J 9/02

(54) **A process for the preparation of a catalyst, a catalyst obtained thereby, and its use in the production of nanotubes**
Verfahren zur Herstellung eines Katalysators, dadurch erhaltener Katalysator und dessen Verwendung bei der Herstellung von Nanoröhrchen
Procédé pour la préparation d'un catalyseur, catalyseur ainsi obtenu et son utilisation dans la production de nanotubes

(43) Date of publication of application: 04.08.2010
(73) Proprietor: Mazzocchia, Carlo Vittorio, 20131 Milano (IT); Bestetti, Massimiliano, 20133 Milano (IT); Acierno, Domenico, 80129 Napoli (IT)
(72) Inventor: Mazzocchia, Carlo Vittorio, 20131 Milano (IT); Bestetti, Massimiliano, 20133 Milano (IT); Acierno, Domenico, 80129 Napoli (IT); Tito, Alina, 20129 Milano (IT)
(74) Representative: Cinquantini, Bruno

(56) References cited:
- WO-A-2006/091277
- FR-A- 2 826 596
- FR-A- 2 872 061
- FR-A- 2 881 734
- FR-A- 2 895 393
- US-A1- 2001 036 549
- HARUTYUNYAN A R ET AL: "CVD synthesis of single wall carbon nanotubes under soft conditions" NANO LETTERS, ACS, WASHINGTON, DC, US, vol. 2, no. 5, 1 January 2002 (2002-01-01), pages 525-530, XP002226016 ISSN: 1530-6984
- MAURON P ET AL: "Fluidised-bed CVD synthesis of carbon nanotubes on Fe2O3/MgO" DIAMOND AND RELATED MATERIALS, ELSEVIER SCIENCE PUBLISHERS, AMSTERDAM, NL, vol. 12, no. 3-7, 1 March 2003 (2003-03-01), pages 780-785, XP004423758 ISSN: 0925-9635

## Description

The present invention relates to a process for the preparation of a catalyst for use in the production of carbon nanotubes; the invention also relates to the catalyst obtained by said process and its use in the production of nanotubes.

Carbon nanotubes are generally referred to with the abbreviation (CNTs); these materials exist in a form with a single wall, consisting of a single layer of carbon atoms that defines a cylindrical wall, known as SWNT (Single-Wall NT), and in a multiple-wall form, known as MWNT (Multi-Wall NT), consisting of a plurality of concentric walls. CNTs are studied for use in various applications among which, for instance, the production of field emission displays (FEDs), stocking of gases, support for catalytic materials, and as reinforcement in polymers and composite materials.

CNTs can be produced by various means, e.g. with an electric arc or by laser ablation. These techniques enable only low productivity rates, however, which are not sufficient for the large-scale use of CNTs in industrial applications. The most suitable method for producing CNTs in large quantities is chemical vapour deposition (CVD), wherein one or more species are made to react in a gaseous state in the presence of a catalyst, possibly supported, to give rise to a solid carbonaceous product. Studies on the production of CNTs by means of this method have led to the definition of the main reaction conditions, being the use of a precursor carbon compound (e.g. methane, ethylene, acetylene, carbon monoxide, ...) together with a blend of gases (generally hydrogen and an inert gas); process temperatures comprised between 400 and 1200 °C; and the need to use a catalyst chosen among the transition metals, and particularly iron, nickel, cobalt, manganese or molybdenum, in a finely divided form. It is important to add that, although it has become commonplace to use the term catalyst in this field (and it will also be adopted herein), the metallic catalyst in this case is in fact progressively exhausted as a result of the continuous deposition of CNTs. As a consequence, the validity of both the catalytic system and the process conditions are clearly evident from the ratio between the quantity of CNTs produced and the quantity of metal employed to do so. In the known processes, the values of this ratio can typically range between 20 and 25, using the same reaction times.

The CVD method is preferably used in the so-called fluidized bed conditions, wherein the particles of catalyst are kept in motion by a vertical upward flow of gas comprised from underneath the bed of catalyst, and generally formed by the reagent gases; in these conditions, the height of the part of the reactor containing the catalyst, and therefore where the reaction takes place, can be up to several tens times higher than the height of the catalyst bed in the absence of such a gas flow. The minimum gas flow rate needed to establish the fluidized bed conditions is known by the abbreviation U_{mf}.

The use of the CVD method in fluidized bed conditions for the production of CNTs is described in the publication "A Review of Carbon Nanotube Synthesis via Fluidized-Bed Chemical Vapor Deposition", C. H. See et al., Ind. Eng. Chem. Res. 2007, 46, 997-1012. The same technique is also the object of various patents, e.g. FR 2826596, FR 2881734, FR 2909989 and US 6423288, and patent applications, e.g. US 2008/0003169, US 2008/0003170, WO 2007/074312 and WO 2008/065121.

Despite all the research conducted to date, the productivity of the known processes in terms of the conversion of the precursor carbon compounds into CNTs is still unsatisfactory. This non-optimal productivity may be due to a low degree of conversion of the precursor (a considerable proportion of which consequently emerges unchanged by the process); to a limited selectivity of the process towards CNTs (giving rise to a mixture of various carbonaceous materials, including amorphous carbon, for example), or to a combination of both these factors. For instance, the productivity achieved by operating in accordance with FR 2872061 is 0.027 and 0.38 g of CNTs per minute working with reactors with an internal diameter of 2.5 cm and 5 cm, respectively.

It is the general object of the present invention to achieve a higher productivity of CNTs than is achievable with the known state of the art.

This general object is achieved by the present invention through its various aspects, which particularly concern: the process for preparing the catalyst to use in the production of CNTs; the catalyst obtained by said process; the use of said catalyst in the CNTs production process; and the purification of the nanotubes by removing the catalyst and the catalyst-supporting medium from the end product.

A first aspect of the invention concerns the process for preparing a catalyst for use in the production of CNTs, which comprises the following steps:
**a**) obtaining the supporting medium, consisting of alumina in powder form with a surface area comprised between 90 and 140 m²/g, and particle size comprised between 10 and 500 µm obtained by calcination in air at 750 °C of a neutral γ-alumina with a surface area greater than 150 m²/g;
**b**) adding the alumina obtained in step **a** to an organic solvent;
**c**) adding to the solvent containing the alumina an iron compound soluble in said solvent in an amount such that the weight of iron is comprised between 2% and 30% of the weight of the alumina;
**d**) removing the solvent by evaporation under reduced pressure to obtain a product consisting of alumina with the iron compound deposited on its surface;
**e**) calcination of the product obtained in step **d** at a temperature comprised between 300 °C and 800 °C in an oxidising environment to obtain a second product consisting of alumina with an iron oxide deposited on its surface;
**f**) reducing the iron oxide formed during step **e** at a temperature comprised between 400 °C and 800 °C in a reducing environment in order to obtain the catalyst.

The invention is described in detail below with reference to the figures, wherein:
- Fig. 1 is a graph showing the results of a thermogravimetric test conducted on CNTs produced and purified according to the invention; and
- Fig. 2 is a graph showing the results of a thermogravimetric test conducted on CNTs produced according to the invention but not purified.

The prior art describes numerous methods for preparing catalysts for use in the production of CNTs. The inventors have found, however, that particularly valid results are obtained, in terms of productivity, if the catalyst is composed of iron on alumina, and if it is prepared with the impregnation method, using organic solvents and, after impregnation, removing the solvent at a reduced pressure.

The first step, **a**, in the process for preparing the catalyst according to the invention consists in obtaining the alumina powder constituting the catalyst supporting medium with a surface area comprised between 90 and 140 m²/g and particle size comprised between 10 and 500 µm by calcining in air at 750 °C neutral γ-alumina with a surface area greater than 150 m²/gthe alumina powder preferably has particle size comprised between 30 and 250 µm.

Aluminas have different characteristics and give the final catalyst different properties, depending on their surface acidity; the alumina used for the purposes of the invention is neutral γ-alumina, which is sold, for instance, by Sigma Aldrich (and identified in their catalogue as "neutral").

As for surface area, the inventors have ascertained that values outside of the above-mentioned range lead to the formation of catalysts of suboptimal efficiency. In the case of values below 90 m²/g, this is attributable to an excessively scarce final contact surface between the catalytic metal and the reagent gases. Vice versa, if the values exceed 140 m²/g, the alumina develops a high surface energy, which is translated into a relative instability of the surface and consequently a partial dissolution of the alumina in the (normally acid) iron salt solutions used in the subsequent step **b**. This last observation made by the inventors is surprising because the activity of catalysts generally tends to be greater, the larger their surface area. The alumina of the invention is produced by submitting a neutral γ-alumina with a surface area greater than 150 m²/g to a pre-calcination heat treatment in air at 750 °C for 120 minutes; this pre-calcination treatment partially reduces the surface area of the alumina, though not to a significant extent, and stabilises the material, making it less soluble in the solvents used in the subsequent steps. For instance, after pre-calcination in air at 750 °C for 120 minutes, the neutral alumina sold by Sigma Aldrich dissolves in ethanol at ambient temperature in proportions of no more than 1%.

The particle size is important to enable the optimal control of the fluid dynamic conditions when the catalyst is subsequently used in the production of nanotubes. In particular, particles that are too small would have the disadvantage of being unable to form a mechanically-stable catalytic bed and, in the case of fluidized bed conditions, they would be entrained by the reagent gases and consequently drawn outside the reaction area. Alumina powders suitable for the purposes of the invention can be obtained starting from powders with a generic particle size distribution, e.g. by screening or vibroscreening and recovering the fraction of interest. Alternatively, the pre-fluidisation technique can be used, in which the powder is graded by means of a gas flow directly onto a bed of powder from below, that distributes the powder throughout the height of a column according to the size, and consequently also the weight, of the particles.

The second step, **b**, in the process consists in adding an organic solvent to the alumina. The solvent the alumina is added to is an organic solvent capable of dissolving the iron compound chosen for the subsequent impregnation step. The inventors have found that using an organic solvent instead of water (which is by far the most often-used solvent for such preparations according to the known state of the art) gives rise to an end product with improved properties with a view to its use in fluidized bed conditions. In particular, unlike catalysts obtained using water, the catalyst obtained according to the invention takes the form of a powder that is not liable to caking and does not form lumps, thus improving the dispersion of the powder in the catalytic bed and increasing its exposed surface area. If the iron compound is scarcely polar, as in the case, for instance, of an organometallic iron compound, then solvents with a low polarity can be used, such as ethers or even hydrocarbons. In the more common case in which the iron compound is a salt, the solvent has to be polar and may be, e.g., dimethyl sulphoxide, a ketone or an alcohol. The preferred solvent is ethyl alcohol.

The third step in the process, **c,** consists in adding to the mixture of solvent and alumina an iron compound soluble in said solvent. As mentioned previously, the iron compound may be of the organometallic type, such as a ferrocene, iron acetylacetonate or an iron alcoxide. Alternatively, a soluble iron salt can be used, such as the chlorides FeCl₂ and FeCl₃, the nitrates Fe(NO₃)₂ and Fe(NO₃)₃, the sulphates FeSO₄ and Fe₂(SO₄)₃ (all these salts can be in anhydrous form or in various hydrated forms), the oxalate Fe₂(C₂O₄)₃ or the basic acetate FeOH(C₂H₃O₂)₂ (the latter being soluble in ethyl alcohol). Iron in these compounds may be in oxidation stage (II) or (III); in any case, the subsequent calcination treatment in an oxidising atmosphere converts the compound into the oxide Fe₂O₃.

The weight to weight (w/w) ratio of the components described so far can vary within wide ranges.

The w/w ratio between the iron compound and the alumina is such that, at the end of the process, the weight of metallic iron is comprised between about 2% and 30% of the weight of alumina, preferably between 5% and 15%, and even more preferably is around 10% of the weight of alumina. By choosing a particular iron compound to start with, and the required quantity of metallic iron in relation to the alumina in the end product, the weight of said compound initially needed can be determined by means of straightforward stoichiometric calculations.

The ratio between the volume of solvent and the weight of the starting solid components may be any, provided that the quantity of solvent is sufficient to completely wet the alumina, impregnating its porosities too, and to dissolve the iron compound. In practice, it is preferable to use the minimum quantities of solvent needed to achieve these goals because, in addition to affording an advantage in economic terms, this condition facilitates the deposition of the iron compound on the surface of the alumina. The necessary quantity of solvent can be delivered to the system either by mixing all of the solvent with a first solid component (i.e. to wet the alumina or to dissolve the iron compound) and then adding the second solid component to the resulting mixture, or in two separate parts, i.e. immersing the alumina in one part of the solvent, and dissolving the iron compound in the remainder of the solvent, and then combining the two. In this latter case, two different solvents can be used for the two parts, provided they are completely miscible with one another and combining them does not give rise to any separation or precipitation of the iron compound.

To determine the quantity of solvent needed, reference can be made to the weight of the alumina alone; preferred quantities are between 0.5 and 5 cc and preferably between 1 and 2 cc of solvent per gram of alumina.

The next step, **d**, consists in making the solvent evaporate slowly under controlled conditions, at a reduced pressure and preferably while stirring. During this step, the iron compound deposits on the surface of the alumina. The most straightforward and convenient method for completing this step is to use a rotary evaporator, preferably at ambient temperature and at pressures below 100 mbar, and preferably comprised between about 30 and 50 mbar.

The output from this step can optionally be dried, e.g. in an oven, at temperatures comprised between 100 and 300 °C in an inert gas atmosphere (e.g. nitrogen).

The next step, **e**, consists in the calcination of the products emerging from step **d**, after possible drying. This involves treating the product at a temperature comprised between 300 and 800 °C in an oxidising environment, and preferably in dynamic conditions, i.e. under a flow of oxidising gas, preferably in the chamber of a furnace, such as a quartz tubular chamber connected to gas inlet and outlet lines. The oxidising gas may be air, oxygen, or a synthetic mixture of oxygen and an inert gas. The use of air is preferred, with a flow rate of about 0.5 l per minute (l/min) for a quantity of iron comprised between 6 and 8.5 g, at temperatures comprised between about 600 and 700 °C; in these conditions, the treatment generally takes between one and several hours.

The product emerging from step **e**, is red due to the presence of Fe₂O₃ on the surface of the alumina, and this is the precursor of the catalyst according to the invention. This product is stable in air and can consequently be separated, stored for even lengthy periods of time, and shipped, without any particular precautions. In the case of the production of CNTs not taking place immediately after the preparation of the catalyst, it may then be convenient to isolate the product obtained in step **e** as such, instead of completing the preparation of the actual metallic catalyst, since the latter's storage demands special treatment and an inert atmosphere.

The last step in the process for preparing the catalyst, **f**, consists in a treatment to reduce the iron oxide formed in step **e** at a temperature comprised between 400 and 800 °C, and preferably between 600 and 700 °C, in a reducing environment. The reducing environment generally consists of a mixture of nitrogen and hydrogen, and preferably of an equimolar mixture of these two gases.

This step can be completed in the same furnace chamber as the previous step, after flushing the furnace with a flow of inert gas, e.g. nitrogen, for long enough to ensure that the chamber contains no remaining traces of oxygen; then, after restoring the temperature in the chamber to the required level, the mixture of nitrogen and hydrogen can be delivered into the chamber.

According to an alternative and preferred method, this reduction is done in fluidized bed conditions, in the same reaction chamber where the nanotubes are subsequently produced. In this case, the product of step **e** is loaded onto a porous septum of a vertical reactor, the reducing gas mixture is delivered from below at a flow rate sufficient to fluidise the bed of alumina powder with the iron oxide deposits, the temperature is brought up to a value comprised within the above-specified range, e.g. 650 °C, and the system is left to react for a time comprised between about 30 minutes and 2 hours. The catalyst is thus produced in its active and extremely sensitive form already inside the reactor where it will be used to produce CNTs so, when this method is adopted, preferably the catalyst preparation is immediately followed by the CNTs production.

In a second aspect, the invention concerns a process for the production of carbon nanotubes wherein the catalyst prepared by means of the previously-described process is employed.

This CNTs production process comprises the following steps:
**g**) loading the catalyst onto the porous septum of a vertical reactor designed for reactions in fluidized bed conditions;
**h**) instauration of a flow of hydrogen, or of a mixture containing hydrogen, at a flow rate sufficient to establish fluidized bed conditions in the catalyst powder, and preferably at a flow rate comprised between 4 and 20 times the minimum flow rate needed to establish said conditions, while simultaneously raising the temperature inside the reactor to a level comprised between about 500 °C and 800 °C, and preferably between about 600 °C and 700 °C;
**i**) mixing ethylene with the flow of hydrogen, or of the mixture containing hydrogen, with a flow of ethylene such that the molar ratio hydrogen:ethylene in the gas mixture is at least 2:1.

Step **g** consists in loading the catalyst onto the porous septum inside the vertical reactor. The porous septum used according to the invention has a very fine porosity, i.e. less than 160 µm; it is preferably a septum type P2, P100 or P160, according to the nomenclature adopted in the ISO standard 4793-1980 (E).

This step may involve actually loading a previously-prepared catalyst onto the septum, or it may consist in preparing the catalyst *in situ,* by- loading its precursor (produced in step **e**) onto the septum and then converting the iron oxide into metallic iron inside the reactor according to the previously-described preferred method for step **f**.

In the next step, **h**, the fluidized bed conditions are established inside the reactor for the catalyst contained therein. This step involves delivering the flow of gas inside the reactor upwards from below at a minimum rate, indicated in the field by the term U_{mf}, which depends on various factors, including the temperature and the particle size of the powder being fluidised. Determining the value of U_{mf} for any given reactor and any set of process parameters, is common knowledge of any person skilled in the art, and in any case the creation of suitable fluidized bed conditions can easily be verified by monitoring the load losses when the reactor is in operation. To give a few examples, the inventors have noted that, using a reactor with an internal diameter of 2.3 cm, the fluidized bed conditions are established with a gas flow rate of 31 cc/min at 25 °C, and 6.5 cc/min at 650 °C, while operating at 650 °C in a reactor with an internal diameter of 5.3 cm it is necessary a gas flow rate of at least 8.1 cc/min. The fluidized bed conditions are initially established with hydrogen, or a mixture containing hydrogen, before adding the ethylene; an equimolar mixture of hydrogen and nitrogen is preferable for this purpose.

For the purposes of the invention, the gas flow rate is preferably between 4 and 20 times the value of U_{mf} in the specific conditions adopted; the inventors have found that, in these conditions, the fluidized bed is distributed optimally throughout the reactor, covering an area up to 100 times the initial height of the static bed of powder, and in these conditions the system reaches the maximum possible homogeneity of material and temperature distribution, enabling the desired increase in the productivity of CNTs.

During the creation of the fluidized bed conditions, the temperature of the system is brought up to a value comprised between about 500 and 800 °C and preferably around 650 °C. Since the effective temperature in the reaction area during CNTs production depends on a complex set of numerous variables, such as the heat released by the reaction itself, the thermal capacity of the solid species and gases involved, and the flow rate of the gases, the control to ensure that the temperature remains stably within the desired range must be done using temperature measuring means located in the immediate vicinity of the reaction area (e.g. a thermocouple or an optical pyrometer, the former positioned in and the second pointing towards the reaction area), possibly connected to an automated feedback system governing the power control for the heater serving the reactor.

In the last step, **i**, when the necessary fluidized bed and temperature conditions have been achieved inside the reactor, ethylene is added to the hydrogen/nitrogen mixture as a carbon precursor. The inventors have found that the high CNTs yields of the invention are obtained working with mixtures in which the molar ratio of hydrogen to ethylene is at least 2:1. In particular, excellent results have been obtained with gaseous mixtures in which the molar ratio of hydrogen to ethylene between 3:1 and 4:1, while the ratio of hydrogen to nitrogen is kept equimolar.

After their production, the CNTs must be separated from the catalyst. This can be done by dissolving the alumina and the iron in acid or alkaline solutions; the end product of the above-described process comprises a carbonaceous material, almost entirely CNTs, known for insolubility in such solutions. The choice of an acid or base, and the choice of concentration for the solution, are at reach of a chemist. This dissolving stage is preferably assisted by mechanical or ultrasound stirring. To recover the CNTs, after dissolving the catalyst, the resulting suspension is generally filtered and the material remaining on the filter is washed with demineralised water, then the CNTs are removed from the filter and dried in an oven at a temperature of at least 100 °C.

The invention is now further illustrated by means of the following examples.

### EXAMPLE 1

This example refers to the preparation of a catalyst according to the invention.

A metallic iron-based catalyst supported on neutral γ-alumina (Sigma-Aldrich) is prepared with a quantity of metallic Fe amounting to 10% of the weight of the Al₂O₃. The alumina obtained from the retailer is characterised using the B.E.T. method and found to have a surface area of 155 m²/g; this alumina is subjected to a pre-calcination treatment in air at 750 °C for two hours. A second B.E.T. measurement is obtained on a part of the resulting alumina powder, from which it emerges that, after the treatment, the alumina has a surface area of 130 m²/g. The product of pre-calcination is sieved to separate the fraction with a particle size distribution comprised between 10 and 500 µm; 20 g of alumina thus selected are immersed in 7.5 cc of ethanol and mixed to facilitate impregnation. The first impregnation generates heat, so the system is left to cool before a further 7.5 cc of ethanol are added. A solution of an iron precursor salt is separately prepared by dissolving 16.07 g of Fe(NO₃)₃•9H₂O in 9.4 cc of ethanol, and stirring. The iron salt solution is poured into a balloon flask in a rotary evaporator, then the solvent containing the alumina is added to the solution. The alumina is left to become impregnated with the iron salt for one hour at 30 °C, stirring the system by rotation at 30 rpm. Then the solvent is removed from the alumina, operating under a partial vacuum of 30 mbar at 30 °C for one hour and continuing to turn the rotary evaporator at 30 rpm. The nearly dry product recovered is then completely dried in a quartz tubular reactor (2 cm in diameter and 75 cm in length) positioned horizontally in a tubular furnace, operating under a flow of nitrogen of 100 cc/min at 78 °C; this drying procedure takes one hour.

The dried product is then calcined in a quartz tubular reactor (2 cm in diameter and 75 cm in length), positioned horizontally in a tubular furnace. The heat treatment takes place in a dynamic environment, in the presence of a flow of air, in the following working conditions:
- temperature gradient of 10 °C/min from room temperature up to 700 °C;
- isotherm of one hour at 700 °C;
- air flow of 100 cc/min.

Finally, the catalyst is activated to obtain metallic iron supported over alumina. This activation is done in a fluidized bed reactor, in the following working conditions:
- heating at 10 °C/min from room temperature up to 650 °C;
- isotherm of 45 minutes at 650 °C;
- flow of 200 cc/min of H₂ and 200 cc/min of N₂;
- cooling to ambient temperature in a flow of N₂.

### EXAMPLE 2

This example refers to a process for the production of nanotubes according to the invention.

3 g of catalyst prepared as described in example 1 are loaded onto the porous septum of a vertical reactor with an internal diameter of 2.28 cm and a height of 32 cm, with the porous septum positioned 5 cm from the bottom (inlet point of the gases). The reactor is brought to 650 °C and fed with a mixture consisting of 200 cc/min of hydrogen and 200 cc/min of nitrogen to establish the fluidized bed conditions. Then 50 cc/min of ethylene are added to said mixture for 120 minutes; these conditions correspond to a quantity of carbon amounting to 5.99 g. The material produced was recovered by separating the reactor into four sections 7.5 cm in height. The total quantity of nanotubes produced is approximately 4.45 g.

### EXAMPLE 3

This example refers to the purification of the CNTs.

50 g of material prepared as described in example 2 are suspended in 500 cc of demineralised water in a balloon flask with three necks and a capacity of 2 L; then 500 cc of 98% concentrated sulphuric acid are added dropwise while stirring. The balloon flask is heated in backflow to a temperature of 140 °C for two hours. After this treatment alumina and iron pass into the solution in the form of sulphates. The solution is filtered while still hot through a sintered material with a porosity P3. The carbon nanotubes are then washed with demineralised water until a solution with a neutral pH is obtained. The material thus collected is placed in an oven for 72 hours at 120 °C, obtaining a dry material.

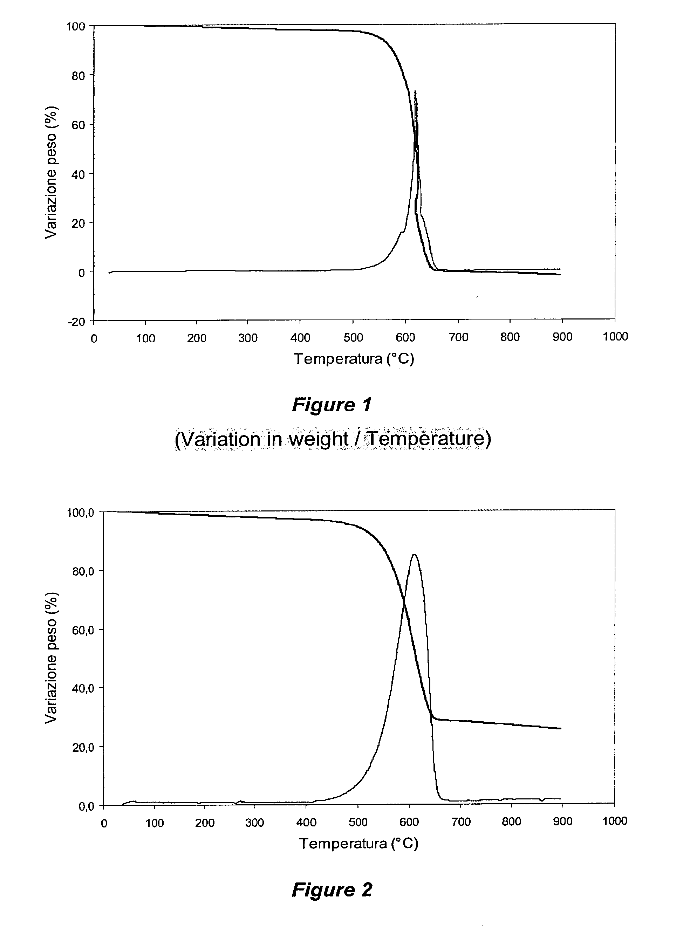

The product thus obtained is characterised by thermogravimetric analysis (TGA): 4.54 mg of the product are placed in the sample holder of a combined differential scanning calorimeter/thermogravimetric balance instrument (TA Instruments SDT Q600) and a test is conducted by heating the sample from room temperature to 900 °C with a gradient of 10 °C/min under an air flow of 100 cc/minute. The graph containing the test results is shown in figure 1.

For the purposes of comparison, the TGA test is repeated on 2.33 mg of material prepared as in example 2, i.e. before purification. The test is conducted in the same conditions as those described above. The graph showing the test results is given in figure 2. In figures 1 and 2, the thick line in the figure shows the percentage weight loss of the sample, while the thin line shows the differential curve of the same weight loss data, which is useful for determining where the weight variations start and end.

### EXAMPLE 4

This example refers to a comparison of the nanotube production characteristics of a process according to the invention and one according to the known state of the art.

A procedure is completed to prepare a total mass of 15 g of catalyst (alumina support plus metallic iron), as described in example 1. From the activation step (reduction of the iron oxides into metallic iron) onwards, the whole procedure, including the subsequent production of the nanotubes, takes place in fluidized bed conditions in a vertical reactor consisting of a quartz tube with an internal diameter of 5.3 cm. The activation of the catalyst is done with a flow of 2 l/min of an equimolar mixture of hydrogen and nitrogen; the nanotubes are produced by feeding a gaseous mixture consisting of 1000 cc/min of nitrogen, 1000 cc/min of hydrogen and 240 cc/min of ethylene into the reactor immediately after activating the catalyst, operating at 650 °C for 60 minutes.

The test is then repeated in identical conditions with the sole exception that the solvent initially used in the preparation of the catalyst is water instead of ethanol; these conditions correspond to those of patent FR 2872061. The test results are given in Table 1.

**Table 1**

| Solvent | Fluidized bed expansion (times) | CNTs yield (%) |
|---|---|---|
| Ethanol | 34 | 81 |
| Water | 18 | 64 |

### EXAMPLE 5

Example 4 is repeated, operating with smaller quantities of catalyst and lower flow rates of reagent gases.

A procedure is completed to prepare a total weight of 3 g of catalyst, as described in example 4. The procedure takes place in fluidized bed conditions in a vertical reactor consisting of a quartz tube with an internal diameter of 2.3 cm. The catalyst activation is carried out with a flow of 400 cc/min of an equimolar mixture of hydrogen and nitrogen, while a gaseous mixture comprising 200 cc/min of nitrogen, 200 cc/min of hydrogen and 50 cc/min of ethylene is used for the production of nanotubes. The test results are given in Table 2.

**Table 2**

| Solvent | Fluidized bed expansion (times) | CNTs yield (%) |
|---|---|---|
| Ethanol | 43 | 82 |
| Water | 19 | 67 |

### EXAMPLE 6

This example refers to a comparison between the growth of CNTs achieved using a catalyst prepared according to the invention and one prepared with an alumina of larger surface area than that of the invention.

A procedure is completed to prepare a total weight of 3 g of catalyst, as described in example 1. Then 3 g of catalyst are separately prepared, repeating the procedure but without performing the pre-calcination treatment on the commercially available alumina (the solvent used is ethanol in both cases). The procedure takes place in fluidized bed conditions in a vertical reactor consisting of a quartz tube with an internal diameter of 2.3 cm. The catalyst activation is carried out with a flow of 400 cc/min of an equimolar mixture of hydrogen and nitrogen, while the gaseous mixture used for the production of the nanotubes contains 200 cc/min of nitrogen, 200 cc/min of hydrogen and 50 cc/min of ethylene. The test results are given in Table 3.

**Table 3**

| Type of alumina | Fluidized bed expansion (times) | CNTs yield (%) |
|---|---|---|
| Pre-calcined | 43 | 82 |
| Not pre-calcined | 38 | 71 |

### Comment on the results

Figures 1 and 2 show that the material produced according to the process of the invention consists almost entirely of CNTs. In fact, it is known that the various allotropic forms, or other forms of aggregation, of carbon (amorphous carbon, graphite, CNTs,...) have different combustion temperatures; a TG graph in which there are several discrete weight loss events (i.e. distinguishable weight losses that begin and end in a given temperature range, related to the combustion and consequent volatilisation of carbon-based species) is indicative of the presence of several carbon-containing species. Conversely, the graphs in figures 1 and 2 essentially show only one combustion event, in temperature ranges that are known from the literature to coincide with the combustion of CNTs.

A comparison of figures 1 and 2 also shows that, before purification (fig. 2), the product has a content of carbon-based material corresponding to approximately 75% by weight, i.e. 30 times the weight of the iron initially contained in the catalyst, which represents a yield of CNTs far higher than the values typically achieved in the sector. After purification (fig. 1), the weight loss attributable to the combustion of the CNTs is approximately 98% and this demonstrates that the product of the process consists almost entirely of CNTs.

The results of the tests described in examples 4 and 5 demonstrate that the use of an organic solvent instead of water in the initial steps for the preparation of the catalyst alllows to obtain a catalyst whose particles have different aggregation characteristics. In fact, all other conditions being equal, the catalysts of the invention gives rise to a considerably greater expansion of the fluidized bed than with the catalysts produced starting from water, and this goes to show that the latter become aggregated in larger-sized particles than the starting ones. This aggregation can be assumed to be disadvantageous in terms of the yield of CNTs (due to a smaller surface area of catalyst being exposed), as confirmed by the data on the yield of CNTs, which show a higher productivity in the case of the two catalysts produced according to the invention than with those produced starting from water solutions.

Finally, the results of example 6 show that the use of a supporting medium with a surface area in the range of the invention, obtained e.g. by means of a pre-calcination treatment on a commercially available alumina, gives rise to a supported catalyst that can assure a higher CNTs productivity than is achievable using a supporting medium with a larger surface area.

## Claims

1. A process for the preparation of a catalyst for use in the production of carbon nanotubes that comprises the following steps:
**a**) obtaining the supporting medium, consisting of alumina in powder form with a surface area comprised between 90 and 140 m²/g, and particle size comprised between 10 and 500 µm obtained by calcination in air at 750 °C of a neutral γ-alumina with a surface area greater than 150 m²/g;
**b**) adding the alumina obtained in step **a** to an organic solvent;
**c**) adding to the solvent containing the alumina an iron compound soluble in said solvent, in an amount such that the weight of the iron is comprised between 2% and 30% of the weight of the alumina;
**d**) removing the solvent by evaporation under reduced pressure to obtain a product consisting of alumina with the iron compound deposited on its surface;
**e**) calcination of the product obtained in step **d** at a temperature comprised between 300 °C and 800 °C in an oxidising environment to obtain a second product consisting of alumina with an iron oxide deposited on its surface;
**f**) reducing the iron oxide formed during step **e** at a temperature comprised between 400 °C and 800 °C in a reducing environment in order to obtain the catalyst.

2. A process according to claim 1, wherein said alumina has particle size comprised between 30 and 250 µm.

3. A process according to claim 1 wherein, when the iron compound is an organometallic compound selected among a ferrocene, iron acetylacetonate or an iron alkoxide, said organic solvent is chosen among ethers and hydrocarbons.

4. A process according to claim 1 wherein, when the iron compound is a salt, said organic solvent is chosen among dimethyl sulphoxide, ketones or alcohols.

5. A process according to claim 1, wherein said reduction of the iron oxide takes place in a mixture of nitrogen and hydrogen.

6. A process for the production of carbon nanotubes that comprises the following steps:
**g)** loading the catalyst produced according to claim 1 onto a porous septum of a vertical reactor suitable for reactions in fluidized bed conditions;
**h**) instauration of a flow of hydrogen, or of a mixture containing hydrogen, at a flow rate sufficient to establish fluidized bed conditions in the catalyst powder, and preferably at a flow rate comprised between 4 and 20 times the minimum flow rate needed to establish said conditions, while simultaneously raising the temperature inside the reactor to a value comprised between about 500 °C and 800 °C;
**i**) mixing ethylene with the flow of hydrogen, or of the mixture containing hydrogen, with a flow of ethylene such that the molar ratio hydrogen:ethylene in the gas mixture is at least 2:1.

7. A process according to claim 6, wherein step **g** coincides with the production *in situ* of the catalyst resulting from step **f** of claim 1.

8. A process according to claim 6, wherein the temperature for step **h** is comprised between about 600 °C and 700 °C.

9. A process according to claim 6, wherein the molar ratio hydrogen:ethylene in step **i** is comprised between 3:1 and 4:1.

10. A precursor of a catalyst for the production of carbon nanotubes obtainable as a product of step **e** of the process according to claim 1.

11. A catalyst for the production of carbon nanotubes obtainable as a product of step **f** of the process according to claim 1.

12. A catalyst according to claim 11, wherein the weight of metallic iron is comprised between 5% and 15% of the weight of alumina.

## Patentansprüche

1. Verfahren zur Herstellung eines Katalysators zur Verwendung bei der Herstellung von Kohlenstoffnanoröhrchen, welches die nachfolgenden Schritte umfasst:
**a**) Bereitstellen eines Trägermediums bestehend aus Aluminiumoxid in Pulverform mit einer spezifischen Oberfläche zwischen 90 und 140 m²/g und mit einer Partikelgröße von 10 bis 500 µm, welches durch Kalzinieren eines neutralen γ-Aluminiumoxids mit einer spezifischen Oberfläche von größer als 150 m²/g in Luft bei 750°C erhalten worden ist,
**b**) Zugabe des Aluminiumoxids, welches in dem Schritt **a** erhalten worden ist, zu einem organischen Lösungsmittel,
**c**) Zugabe einer Eisenverbindung, welche in dem Lösungsmittel löslich ist, in einer Menge, so dass das Gewicht des Eisens zwischen 2 % und 30 % des Gewichts des Aluminiumoxids beträgt, zu dem das Aluminiumoxid enthaltenden Lösungsmittel,
**d**) Entfernen des Lösungsmittels durch Verdampfen unter reduziertem Druck, um ein Produkt zu erhalten, das aus Aluminiumoxid besteht, auf dessen Oberfläche die Eisenverbindung abgeschieden ist,
**e**) Kalzinieren des in dem Schritt **d** erhaltenen Produkts bei einer Temperatur von 300 bis 800°C in einer oxidierenden Umgebung, um ein zweites Produkt zu erhalten, das aus Aluminiumoxid besteht, auf dessen Oberfläche Eisenoxid abgelagert ist,
**f**) Reduzieren des Eisenoxids, welches während dem Schritt **e** gebildet worden ist, bei einer Temperatur von 400°C bis 800°C in einer reduzierenden Umgebung, um den Katalysator zu erhalten.

2. Verfahren nach Anspruch 1, wobei das Aluminiumoxid eine Partikelgröße von 30 bis 250 µm aufweist.

3. Verfahren nach Anspruch 1, wobei, wenn die Eisenverbindung eine Organometallverbindung ausgewählt aus Ferrocen, Eisenacetylacetonat oder ein Eisenalkoxid ist, das organische Lösungsmittrel aus Ethern und Kohlenwasserstoffen ausgewählt wird.

4. Verfahren nach Anspruch 1, wobei, wenn die Eisenverbindung ein Salz ist, das organische Lösungsmittel aus Dimethylsulfoxid, Ketonen oder Alkoholen ausgewählt wird.

5. Verfahren nach Anspruch 1, wobei die Reduktion der Eisenoxide in einer Mischung aus Stickstoff und Wasserstoff stattfindet.

6. Verfahren zur Herstellung von Kohlenstoffnanoröhrchen, welches die nachfolgenden Schritte umfasst:
**g)** Laden des nach Anspruch 1 hergestellten Katalysators auf ein poröses Septum eines vertikalen Reaktors, welcher für Reaktionen in Wirbelbettbedingungen geeignet ist,
**h)** Erzeugen eines Wasserstoffstroms oder eines Stroms einer Wasserstoff enthaltenden Mischung bei einer Strömungsgeschwindigkeit, welche ausreichend ist, um in dem Katalysatorpulver Wirbelbettbedingungen einzustellen, und vorzugsweise bei einer Strömungsgeschwindigkeit des 4- bis 20-fachen der minimalen Strömungsgeschwindigkeit, welche erforderlich ist, um die Bedingungen einzustellen, während gleichzeitig die Temperatur innerhalb des Reaktors auf einen Wert zwischen ungefähr 500°C und 800°C erhöht wird,
**i)** Vermischen von Ethylen mit dem Wasserstoffstrom oder der Mischung, welche Wasserstoff enthält, mit einem Strom aus Ethylen, so dass das molare Verhältnis von Wasserstoff:Ethylen in der Gasmischung wenigstens 2:1 beträgt.

7. Verfahren nach Anspruch 6, wobei der Schritt **g** mit der *in situ*-Herstellung des von dem Schritt **f** nach Anspruch 1 resultierenden Katalysators einhergeht.

8. Verfahren nach Anspruch 6, wobei die Temperatur für den Schritt **h** zwischen ungefähr 600°C und 700°C beträgt.

9. Verfahren nach Anspruch 6, wobei das molare Verhältnis von Wasserstoff:Ethylen in dem Schritt **i** zwischen 3:1 und 4:1 beträgt.

10. Vorläufer eines Katalysators für die Herstellung von Kohlenstoff-Nanoröhrchen erhältlich als ein Produkt des Schritts **e** des Verfahrens nach Anspruch 1.

11. Katalysator für die Herstellung von Kohlenstoff-Nanoröhrchen erhältlich als ein Produkt von Schritt **f** des Verfahrens nach Anspruch 1.

12. Katalysator nach Anspruch 11, wobei das Gewicht des metallischen Eisens zwischen 5 % und 15 % des Gewichts des Aluminiumoxids beträgt.

## Revendications

1. Procédé de préparation d'un catalyseur destiné à être utilisé dans la production de nanotubes de carbone, qui comprend les étapes suivantes :
a) l'obtention du milieu de support, consistant en une alumine sous forme pulvérulente ayant une surface spécifique comprise entre 90 et 140 m²/g et une taille de particule comprise entre 10 et 500 µm obtenue par calcination à l'air à 750 °C d'une γ-alumine neutre ayant une surface spécifique supérieure à 150 m²/g ;
b) l'ajout de l'alumine obtenue dans l'étape a à un solvant organique ;
c) l'ajout au solvant contenant l'alumine d'un composé de fer soluble dans ledit solvant, en une quantité telle que le poids du fer soit compris entre 2 % et 30 % du poids de l'alumine ;
d) l'élimination du solvant par évaporation sous pression réduite afin d'obtenir un produit consistant en une alumine ayant le composé de fer déposé sur sa surface ;
e) la calcination du produit obtenu dans l'étape d à une température comprise entre 300 °C et 800 °C dans un environnement oxydant afin d'obtenir un second produit consistant en une alumine avec un oxyde de fer déposé sur sa surface ;
f) la réduction de l'oxyde de fer formé lors l'étape e à une température comprise entre 400 °C et 800 °C dans un environnement réducteur afin d'obtenir le catalyseur.

2. Procédé selon la revendication 1, dans lequel ladite alumine présente une taille de particule comprise entre 30 µm et 250 µm.

3. Procédé selon la revendication 1, dans lequel, quand le composé de fer est un composé organo-métallique choisi parmi un ferrocène, l'acétyl-acétonate de fer ou un alcoxyde de fer, ledit solvant organique est choisi parmi les éthers et les hydrocarbures.

4. Procédé selon la revendication 1, dans lequel, quand le composé de fer est un sel, ledit solvant organique est choisi parmi le diméthylsulfoxyde, les cétones ou les alcools.

5. Procédé selon la revendication 1, dans lequel ladite réduction de l'oxyde de fer a lieu dans un mélange d'azote et d'hydrogène.

6. Procédé de production de nanotubes de carbone, qui comprend les étapes suivantes :
g) le chargement du catalyseur produit selon la revendication 1 sur un septum poreux d'un réacteur vertical approprié pour des réactions dans des conditions de lit fluidisé ;
h) l'instauration d'un flux d'hydrogène ou d'un mélange contenant de l'hydrogène à un débit suffisant pour établir des conditions de lit fluidisé dans le catalyseur pulvérulent, et de préférence à un débit compris entre 4 et 20 fois le débit minimum nécessaire pour établir lesdites conditions, tout en augmentant simultanément la température à l'intérieur du réacteur jusqu'à une valeur comprise entre environ 500 °C et 800 °C ;
i) le mélange d'éthylène avec le flux d'hydrogène ou du mélange contenant de l'hydrogène, avec un flux d'éthylène de façon que le rapport molaire hydrogène/éthylène dans le mélange gazeux soit au moins de 2/1.

7. Procédé selon la revendication 6, dans lequel l'étape g coïncide avec la production *in situ* du catalyseur résultant de l'étape f de la revendication 1.

8. Procédé selon la revendication 6, dans lequel la température pour l'étape h est comprise entre environ 600 °C et 700 °C.

9. Procédé selon la revendication 6, dans lequel le rapport molaire hydrogène/éthylène dans l'étape i est compris entre 3/1 et 4/1.

10. Précurseur d'un catalyseur pour la production de nanotubes de carbone, pouvant être obtenu sous la forme d'un produit de l'étape e du procédé selon la revendication 1.

11. Catalyseur pour la production de nanotubes de carbone, pouvant être obtenu sous la forme d'un produit de l'étape f du procédé selon la revendication 1.

12. Catalyseur selon la revendication 11, dans lequel le poids de fer métallique est compris entre 5 % et 15 % du poids de l'alumine.
